# EUROPEAN PATENT APPLICATION

(11) **EP 4 757 111 A1**
(43) Date of publication of application: **10.06.2026**
(21) Application number: 25857925.9
(22) Date of filing: 09.09.2025
(51) Int. Cl.: H02J 7/00, H01M 10/44

(54) **CELL CHARGING AND DISCHARGING DEVICE HAVING DISTANCE-ADJUSTABLE CELL GRIPPERS, AND CELL CHARGING AND DISCHARGING METHOD USING SAME**

(30) Priority: 24.09.2024 KR 20240128828
(71) Applicant: LG ENERGY SOLUTION, LTD., Seoul 07335 (KR)
(72) Inventor: Jung, Jea Bong, Daejeon 34122 (KR); Kim, Young Woo, Daejeon 34122 (KR)
(74) Representative: Goddar, Heinz J.
(86) International application number: PCT/KR2025/013989
(87) International publication number: WO 2026/071568

(57) **Abstract**

Disclosed are a cell charging and discharging apparatus provided with distance-adjustable cell grippers and a cell charging and discharging method using the same, and more particularly a cell charging and discharging apparatus including cell grippers located spaced apart from each other by a certain distance, a distance adjustment unit configured to adjust the distance between the cell grippers, and a driving unit connected to the distance adjustment unit, the driving unit being configured to drive the distance adjustment unit, wherein the cell gripper includes a body portion, a piezoelectric element located on each of both sides of the body portion, and a connection portion configured to connect the body portion and the piezoelectric element to each other, the length of the connection portion being adjustable, and a cell charging and discharging method using the same.

## Description

### [Technical Field]

This application claims the benefit of priority to Korean Patent Application No. 2024-0128828 filed on September 24, 2024, the disclosure of which is incorporated herein by reference in its entirety.

The present invention relates to a cell charging and discharging apparatus provided with a distance-adjustable cell gripper and a cell charging and discharging method using the same, and more particularly to a cell charging and discharging apparatus provided with a distance-adjustable cell gripper capable of performing charging and discharging of battery cells of various sizes and a cell charging and discharging method using the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, before a battery cell is received in a battery module, a cell charging and discharging process is performed using a cell charging and discharging apparatus in order to activate the battery cell and to bring the battery cell into a usable state.

Battery cells are manufactured in various sizes depending on the size of cases of battery modules in which the battery cells are received or the type of devices in which the battery cells are mounted, whereby individual cell charging and discharging apparatuses are also required so as to correspond to various sizes.

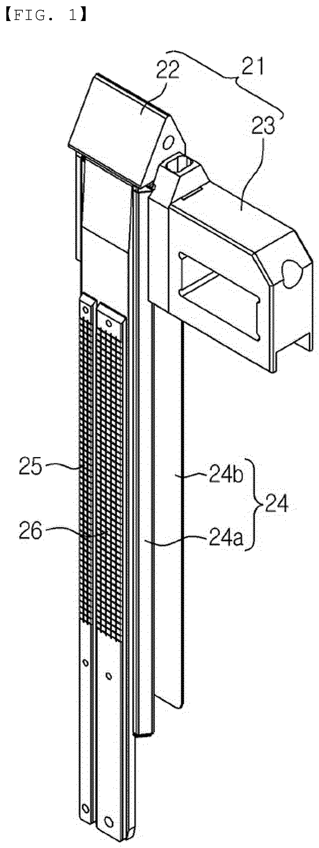

FIG. 1 is a perspective view showing a conventional gripper unit. As shown in FIG. 1, the conventional gripper unit is configured to grip and fix a battery cell during charging and discharging of the battery cell, and includes a gripper head unit 21, a pair of gripper pressing units 24 connected to the gripper head unit 21, the pair of gripper pressing units extending downward to a cell insertion space, a current terminal 25 configured to apply current to a secondary battery cell, and a voltage terminal 26 configured to apply voltage to the secondary battery cell.

In addition, the gripper head unit 21 includes a cap member 22 located above the gripper pressing unit 24, the cap member being configured to guide an electrode lead, and a slidable block member 23.

The conventional gripper unit has the disadvantage that, since the gripper pressing units 24 are fixed, only a secondary battery cell of a certain size can be charged and discharged, whereby gripper pressing units 24 of new sizes are required to charge and discharge secondary battery cells of different sizes.

### (Prior Art Document)

(Patent Document 1) Korean Patent Application Publication No. 2020-0017825

### [Disclosure]

### [Technical Problem]

The present invention has been made in view of the above problems, and it is an object of the present invention to provide a cell charging and discharging apparatus provided with a distance-adjustable cell gripper capable of performing charging and discharging of battery cells of various sizes by adjusting the distance between the cell grippers and a cell charging and discharging method using the same.

### [Technical Solution]

A cell charging and discharging apparatus according to the present invention to accomplish the above object includes cell grippers (100) located spaced apart from each other by a certain distance, a distance adjustment unit (200) configured to adjust the distance between the cell grippers (100), and a driving unit (300) connected to the distance adjustment unit (200), the driving unit being configured to drive the distance adjustment unit (200), wherein the cell gripper (100) includes a body portion (110), a piezoelectric element (120) located on each of both sides of the body portion (110), and a connection portion (130) configured to connect the body portion (110) and the piezoelectric element (120) to each other, the length of the connection portion being adjustable.

Also, in the cell charging and discharging apparatus according to the present invention, the connection portion (130) may be formed in the shape of an expandable and contractable tube.

Also, in the cell charging and discharging apparatus according to the present invention, the connection portion (130) may be connected to an air pump (140) configured to supply and extract air.

Also, in the cell charging and discharging apparatus according to the present invention, an air passage portion (141) configured to connect the air pump (140) and the connection portion (130) to each other may be provided, and a part of the air passage portion (141) may be embedded in the body portion (110).

Also, in the cell charging and discharging apparatus according to the present invention, the connection portion (130) may include at least one of polyethylene (PE), polypropylene (PP), polyimide (PI), and polyvinyl chloride (PVC).

Also, in the cell charging and discharging apparatus according to the present invention, the distance adjustment unit (200) may be formed in the shape of a bar provided at each of both ends thereof with a fastening member (210) and having a certain length.

Also, in the cell charging and discharging apparatus according to the present invention, the body portion (110) may have a guide portion (111) formed at each of a position spaced apart from one side edge thereof by a certain distance and a position spaced apart from the other side edge thereof by a certain distance, the guide portion being configured to allow the fastening member (210) to be fastened thereto.

Also, in the cell charging and discharging apparatus according to the present invention, the guide portion (111) may be formed in the shape of a rail having a certain length in a height direction.

Also, in the cell charging and discharging apparatus according to the present invention, the fastening member (210) may move along a region where the guide portion (111) is formed in the height direction.

Also, in the cell charging and discharging apparatus according to the present invention, the distance adjustment unit (200) may be provided in two so as to interconnect one body portion (110) and another body portion (110) adjacent thereto, and the two distance adjustment units (200) may be connected to the body portions (110) so as to form an X-shaped configuration.

In addition, a cell charging and discharging method using the cell charging and discharging apparatus according to the present invention includes a first step of locating an electrode lead of a battery cell between the cell grippers, a second step of adjusting the position of the cell gripper so as to be adjacent to the electrode lead, a third step of moving the piezoelectric element so as to be in tight contact with the electrode lead, a fourth step of charging and discharging the battery cell, and a fifth step of separating the piezoelectric element from the electrode lead.

### [Advantageous Effects]

As is apparent from the above description, a cell charging and discharging apparatus provided with a distance-adjustable cell gripper according to the present invention and a cell charging and discharging method using the same have the advantage that it is possible to perform charging and discharging of battery cells of various sizes by adjusting the distance between cell grippers through a distance adjustment unit.

In addition, the cell charging and discharging apparatus provided with the distance-adjustable cell gripper and the cell charging and discharging method using the same have the advantage that a piezoelectric element is moved so as to be in tight contact with an electrode lead by supplying and extracting air, whereby it is possible to inhibit damage to the electrode lead due to the pressure applied thereto.

### [Description of Drawings]

FIG. 1 is a perspective view showing a conventional gripper unit.
FIG. 2 is a perspective view showing a cell charging and discharging apparatus according to a preferred embodiment of the present invention.
FIG. 3 is a front view showing the state in which cell grippers are spaced apart from each other by a driving unit in the cell charging and discharging apparatus according to the preferred embodiment of the present invention.
FIG. 4 is a front view showing the state in which the cell grippers are located adjacent to each other by the driving unit in the cell charging and discharging apparatus according to the preferred embodiment of the present invention.
FIG. 5 is a view showing that the cell gripper according to the preferred embodiment of the present invention comes into tight contact with an electrode lead.
FIG. 6 is a flowchart showing a cell charging and discharging method using the cell charging and discharging apparatus according to the preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a cell charging and discharging apparatus provided with a distance-adjustable cell gripper according to the present invention and a cell charging and discharging method using the same will be described with reference to the accompanying drawings.

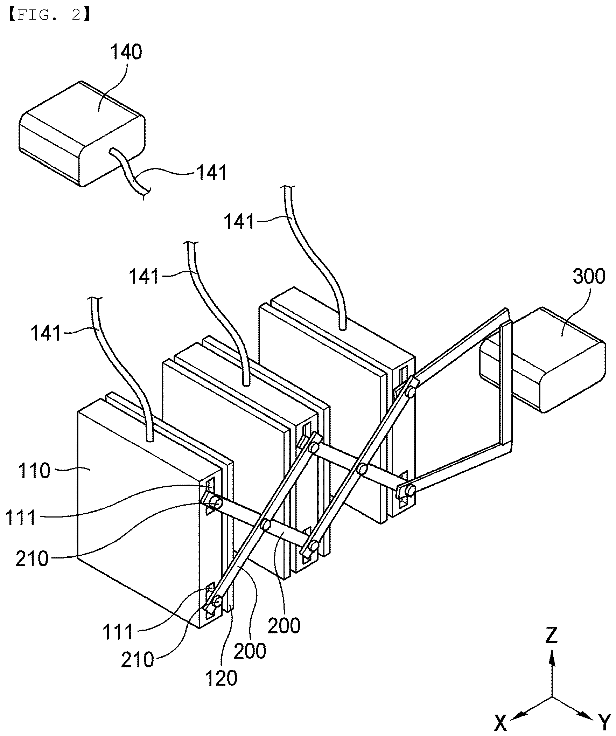

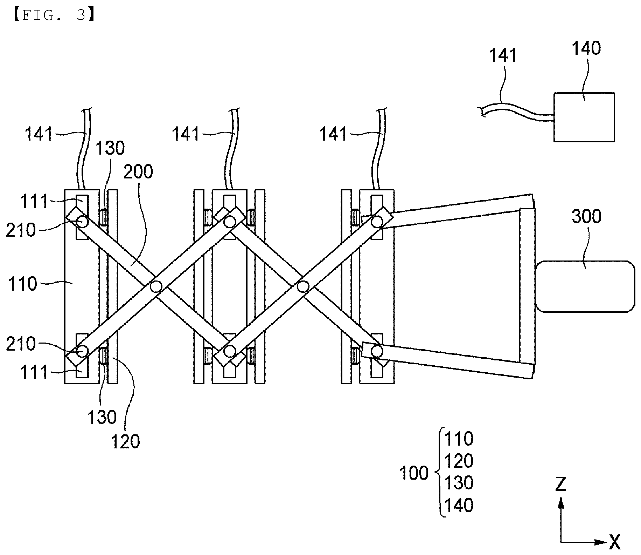

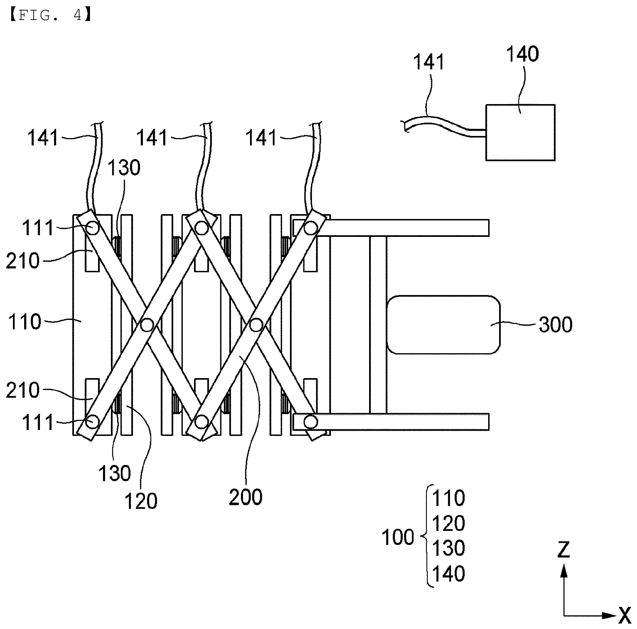

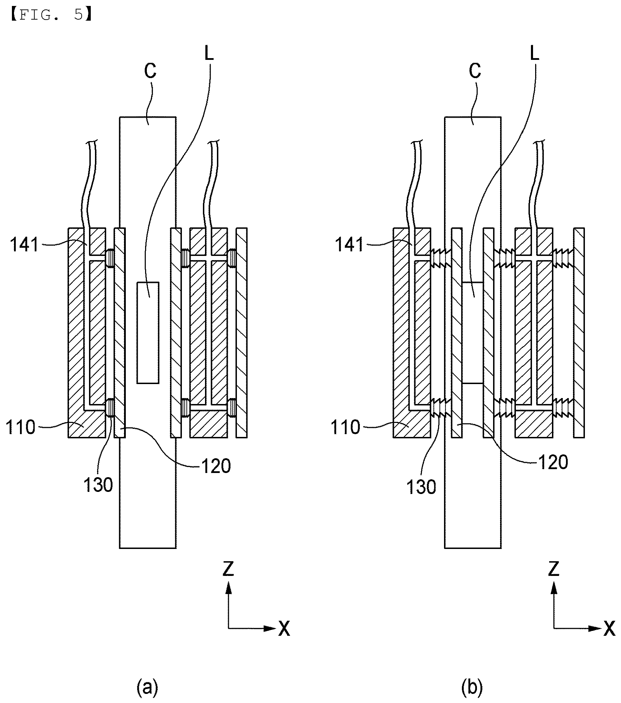

FIG. 2 is a perspective view showing a cell charging and discharging apparatus according to a preferred embodiment of the present invention, FIG. 3 is a front view showing the state in which cell grippers are spaced apart from each other by a driving unit in the cell charging and discharging apparatus according to the preferred embodiment of the present invention, FIG. 4 is a front view showing the state in which the cell grippers are located adjacent to each other by the driving unit in the cell charging and discharging apparatus according to the preferred embodiment of the present invention, and FIG. 5 is a view showing that the cell gripper according to the preferred embodiment of the present invention comes into tight contact with an electrode lead.

Referring to FIGs. 2 to 5, the cell charging and discharging apparatus according to the preferred embodiment of the present invention includes a cell gripper 100, a distance adjustment unit 200, and a driving unit 300.

First, the cell gripper 100 fixes a battery cell C to be charged and discharged in tight contact therewith to perform charging and discharging, wherein the cell gripper includes a body portion 110, a piezoelectric element 120, a connection portion 130, and an air pump 140.

The body portion 110 supports some of the other components of the cell gripper 100, a description of which will follow, so as to be mounted thereto, and may be formed in the shape of a flat plate having a certain thickness.

The body portion 110 may be provided in plural, and may be formed on each of both sides of a single electrode lead L to be charged and discharged.

In addition, when charging and discharging are to be performed on a plurality of electrode leads L, the body portion 110 may be added so as to correspond thereto.

In an example, as shown in the figures, the body portion 110 may be provided on each of both sides of electrode leads L located side by side spaced apart from each other.

In addition, the body portion 110 has a guide portion 111 formed at each of a position spaced apart from one side edge thereof by a certain distance and a position spaced apart from the other side edge thereof by a certain distance on the surface thereof corresponding to the distance adjustment unit 200, a description of which will follow.

The guide portions 111 are formed at positions spaced apart from each other in a height direction (Z-axis direction) of the body portion 110, wherein each of the guide portions is formed in the shape of a rail with a certain depth and a certain length in the height direction (Z-axis direction).

A fastening member 210 of the distance adjustment unit 200, a description of which will follow, is coupled to the guide portion 111, which defines a specific region in which the fastening member 210 can move.

Next, the piezoelectric element 120 is in directly tight contact with the electrode lead L of the battery cell C to perform charging and discharging, wherein the piezoelectric element is formed in the shape of a flat plate having a certain area and is provided on the surface of the body portion 110 corresponding to the electrode lead L.

The piezoelectric element 120 is connected to at least one of a current terminal (not shown) and a voltage terminal (not shown) to perform charging and discharging when in tight contact with the electrode lead L.

The connection portion 130 is provided between the body portion 110 and the piezoelectric element 120 to connect the body portion 110 and the piezoelectric element 120 to each other, and may adjust the distance between the body portion 110 and the piezoelectric element 120.

The connection portion 130 is formed in the shape of an expandable and contractable tube, expansion and contraction is achieved through air supply and extraction by the air pump 140, a description of which will follow, and is provided in one or more so as to be located between the body portion 110 and the piezoelectric element 120.

Here, the connection portion 130 includes at least one of polyethylene (PE), polypropylene (PP), polyimide (PI), and polyvinyl chloride (PVC).

The connection portion 130 may move the piezoelectric element 120 such that the piezoelectric element 120 and the electrode lead L can be in tight contact with each other or can be spaced apart from each other.

That is, the connection portion 130 expands, causing the piezoelectric element 120 and the electrode lead L to come into tight contact with each other such that charging and discharging can be performed. Upon completion of charging and discharging, the connection portion 130 contracts, causing the piezoelectric element 120 and the electrode lead L to be spaced apart from each other.

At this time, as described above, the connection portion 130 brings the piezoelectric element 120 into tight contact with the electrode lead L and separates the piezoelectric element 120 from the electrode lead L by air supply and extraction. This may reduce damage to the electrode lead L caused by excessive pressure when the piezoelectric element 120 is brought into tight contact with the electrode lead L.

Next, the air pump 140 supplies and extracts air to and from the connection portion 130 to expand and contract the connection portion 130, wherein the air pump is connected to the connection portion 130 via an air passage portion 141.

In this case, a part of the air passage portion 141 is embedded in the body portion 110 and connected to the connection portion 130.

In addition, the air passage portion 141 connected to the air pump 140 is shown as diverging so as to be connected to the respective body portions 110; however, the air pump 140 and the air passage portion 141 may be provided so as to correspond to each body portion 110 as needed.

Next, the distance adjustment unit 200 is configured to adjust the distance between the body portions 110 located spaced apart from each other, wherein the distance adjustment unit is formed in the shape of a bar having a certain length, and has a fastening member 210 formed at each of both ends of the surface thereof corresponding to the body portion 110.

The distance adjustment unit 200 is provided in two so as to interconnect one body portion 110 and another body portion 110 adjacent thereto, and the two distance adjustment units 200 are connected diagonally to form an X-shaped configuration.

In this case, the fastening member 210 of the distance adjustment unit 200 is connected to the guide portion 111 of the body portion 110, and moves along the region where the guide portion 111 is formed in the height direction (Z-axis direction).

Therefore, upon adjusting the distance between the body portions 110, the distance adjustment unit 200 moves the body portions 110 within a certain distance range. This may prevent the body portions 110 from being completely in tight contact with each other or spaced apart from each other beyond what is necessary.

In an example, when the distance adjustment unit 200 separates the body portions 110 from each other, the fastening members 210 move toward each other, and movement stops when each of the fastening members 210 comes into tight contact with one end of a corresponding one of the guide portions 111.

In addition, when the distance between the body portions 110 is reduced by the distance adjustment unit 200, the fastening members 210 move away from each other, and movement stops when each of the fastening members 210 comes into tight contact with the other end of a corresponding one of the guide section 111.

The driving unit 300 drives the distance adjustment unit 200 to adjust the distance between the body portions 110, and may, for example, be a motor.

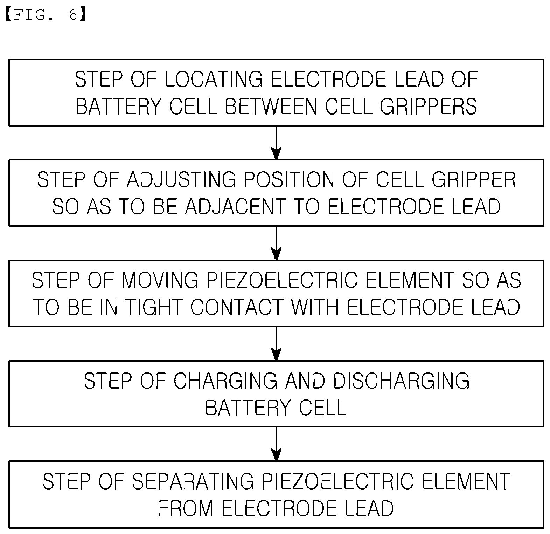

FIG. 6 is a flowchart showing a cell charging and discharging method using the cell charging and discharging apparatus according to the preferred embodiment of the present invention.

Referring to FIG. 6, the cell charging and discharging method according to the preferred embodiment of the present invention includes a first step of locating an electrode lead of a battery cell between the cell grippers, a second step of adjusting the position of the cell gripper so as to be adjacent to the electrode lead, a third step of moving the piezoelectric element so as to be in tight contact with the electrode lead, a fourth step of charging and discharging the battery cell, and a fifth step of separating the piezoelectric element from the electrode lead.

The first step of locating the electrode lead of the battery cell between the cell grippers is a step of locating the electrode leads of the battery cell between the body portions of the cell gripper spaced apart from each other.

The second step of adjusting the position of the cell gripper so as to be adjacent to the electrode lead is a step of adjusting the distance between the body portions of the cell gripper through the distance adjustment unit to move the body portions so as to be spaced apart from each other by a certain distance.

At this time, if the distance between the body portions is reduced by the guide portion of the body portion and the fastening member of the distance adjustment unit, the movement of the body portions stops at certain positions.

That is, the distance between the body portions is not reduced to less than the certain distance, whereby completely tight contact between one body portion and another body portion adjacent thereto may be prevented.

The third step of moving the piezoelectric element so as to be in tight contact with the electrode lead is a step of the connecting portion expanding such that the piezoelectric element is in tight contact with the electrode lead of the battery cell in the state in which one body portion and another body portion adjacent thereto are spaced apart from each other by the certain distance.

The connection portion expands due to air supplied from the air pump via the air passage portion to bring the piezoelectric element connected to the connection portion into tight contact with the electrode lead.

The fourth step of charging and discharging the battery cell is a step of charging and discharging the battery cell through the piezoelectric element in tight contact with the electrode lead of the battery cell.

At this time, the piezoelectric element transmits electricity supplied from the current terminal or the voltage terminal to which the piezoelectric element is connected to the electrode lead such that charging and discharging are performed.

The fifth step of separating the piezoelectric element from the electrode lead is a step of separating the piezoelectric element from the electrode leads upon completion of charging and discharging of the battery cell.

When air is extracted from the connection portion by the air pump, the connection portion contracts, whereby the piezoelectric element is separated from the electrode lead.

Those skilled in the art to which the present invention pertains will appreciate that various applications and modifications are possible within the category of the present invention based on the above description.

### (Description of Reference Symbols)

- 100:: Cell gripper
- 110:: Body portion
- 111:: Guide portion
- 120:: Piezoelectric element
- 130:: Connection portion
- 140:: Air pump
- 141:: Air passage portion
- 200:: Distance adjustment unit
- 210:: Fastening member
- 300:: Driving unit
- C:: Battery cell
- L:: Electrode lead

## Claims

1. A cell charging and discharging apparatus comprising:
cell grippers located spaced apart from each other by a certain distance;
a distance adjustment unit configured to adjust a distance between the cell grippers; and
a driving unit connected to the distance adjustment unit, the driving unit being configured to drive the distance adjustment unit, wherein
the cell gripper comprises a body portion, a piezoelectric element located on each of both sides of the body portion, and a connection portion configured to connect the body portion and the piezoelectric element to each other, a length of the connection portion being adjustable.

2. The cell charging and discharging apparatus according to claim 1, wherein the connection portion is formed in a shape of an expandable and contractable tube.

3. The cell charging and discharging apparatus according to claim 2, wherein the connection portion is connected to an air pump configured to supply and extract air.

4. The cell charging and discharging apparatus according to claim 3, wherein
an air passage portion configured to connect the air pump and the connection portion to each other is provided, and
a part of the air passage portion is embedded in the body portion.

5. The cell charging and discharging apparatus according to claim 2, wherein the connection portion comprises at least one of polyethylene, polypropylene, polyimide, and polyvinyl chloride.

6. The cell charging and discharging apparatus according to claim 2, wherein the distance adjustment unit is formed in a shape of a bar provided at each of both ends thereof with a fastening member and having a certain length.

7. The cell charging and discharging apparatus according to claim 6, wherein the body portion has a guide portion formed at each of a position spaced apart from one side edge thereof by a certain distance and a position spaced apart from the other side edge thereof by a certain distance, the guide portion being configured to allow the fastening member to be fastened thereto.

8. The cell charging and discharging apparatus according to claim 7, wherein the guide portion is formed in a shape of a rail having a certain length in a height direction.

9. The cell charging and discharging apparatus according to claim 8, wherein the fastening member moves along a region where the guide portion is formed in the height direction.

10. The cell charging and discharging apparatus according to claim 7, wherein
the distance adjustment unit is provided in two so as to interconnect one body portion and another body portion adjacent thereto, and
the two distance adjustment units are connected to the body portions so as to form an X-shaped configuration.

11. A cell charging and discharging method using the cell charging and discharging apparatus according to any one of claims 1 to 10, the cell charging and discharging method comprising:
a first step of locating an electrode lead of a battery cell between the cell grippers;
a second step of adjusting a position of the cell gripper so as to be adjacent to the electrode lead;
a third step of moving the piezoelectric element so as to be in tight contact with the electrode lead;
a fourth step of charging and discharging the battery cell; and
a fifth step of separating the piezoelectric element from the electrode lead.
